Europäisches Patentamt

(19) European Patent Office

Office européen des brevets

(11) Numéro de publication: **0 352 205**
A1

## (12) DEMANDE DE BREVET EUROPEEN

(21) Numéro de dépôt: **89430020.1**

(22) Date de dépôt: **20.07.89**

(51) Int. Cl.5: **B 01 D 24/00**
B 01 D 24/48, B 01 D 37/04

(30) Priorité: **22.07.88 FR 8810098**

(43) Date de publication de la demande:
**24.01.90 Bulletin 90/04**

(84) Etats contractants désignés: **DE ES GB IT**

(71) Demandeur: **Société des Eaux de Marseille Société Anonyme**
**25 Rue Edouard Delanglade**
**F-13006 Marseille (FR)**

(72) Inventeur: **l'Henry, Jean-Jacques**
**25, rue Edouard Delanglade**
**F-13006 Marseille (FR)**

**Seiller, Georges**
**25, rue Edouard Delanglade**
**F-13006 Marseille (FR)**

**Simondi, Jean-Marc**
**25, rue Edouard Delanglade**
**F-13006 Marseille (FR)**

(74) Mandataire: **Roman, Michel**
**CABINET ROMAN 35, rue Paradis**
**F-13001 Marseille (FR)**

(54) **Dispositif de régulation des filtres d'une usine de filtration à filtres multiples.**

(57) La présente invention a pour objet un dispositif de régulation d'usine de filtration à filtres multiples. Il est constitué par la combinaison d'un robinet vanne motorisé (11) équipé de contacts de fin de course (24,25) et d'un capteur analogique de position (23), associé à un débitmètre à champ total (11) et placé à l'aval de chacun des filtres (1, 3, 4), sur la conduite de sortie d'eau filtrée (6), et de deux capteurs de niveau (7,8) à l'amont de chaque filtre, l'ensemble étant piloté par un automate de filtration programmé (2) pour calculer et maintenir automatiquement dans chaque filtre un débit égal au quotient du débit global à traiter par le nombre de filtres en service, et générer des alarmes en cas d'anomalies relatives aux débits ou aux niveaux amont.

Il est destiné à assurer le fonctionnement correct et l'équirépartition des débits d'une batterie de filtres multiples montés en parallèle, en particulier dans une usine de traitement d'eau potable.

Fig. 1

## Description

### Dispositif de régulation des filtres d'une usine de filtration à filtres multiples

La présente invention a pour objet un dispositif de régulation d'usine de filtration à filtres multiples.

Il est destiné à assurer le fonctionnement correct et l'équirépartition des débits d'une batterie de filtres multiples montés en parallèle, en particulier dans une usine de traitement d'eau potable.

Dans une usine de traitement d'eau potable, les régulateurs de débit des filtres sont indispensables pour assurer l'équirépartition du débit global entre les filtres en service, ainsi que la compensation continue de la perte de charge due au colmatage des filtres afin de maintenir constant le débit produit par chacun d'eux.

En effet, le colmatage de la couche filtrante dû à l'accumulation des matières dans l'épaisseur de celle-ci a pour effet, par l'accroissement de la perte de charge, de diminuer le débit du filtre. Il convient donc, avant le prochain cycle de régénération de la masse filtrante, de maintenir constant le débit de chaque cellule filtrante, tout en tenant compte des variations du débit total traité par l'usine en fonction des besoins du réseau.

Divers procédés sont utilisés qui font appel soit à une surpression à l'amont, soit à une dépression à l'aval, soit à l'ouverture d'une vanne liée à la charge sur le filtre, mais ces dispositifs provoquent une perte de charge importante qui peut nécessiter la présence des déversoirs, et de plus, les changements importants du débit global de l'usine entraîne l'obligation de régler l'alimentation d'eau brute de chaque filtre.

Le dispositif suivant la présente invention supprime tous ces inconvénients. En effet, il assure à la fois le respect d'une consigne de débit global d'eau filtrée ou d'eau brute de l'usine, et l'équirépartition sur chacun des filtres en service de ce débit, quelles que soient les variations de ce dernier, tout en réduisant les pertes de charge au minimum, car l'admission sur les filtres et la vanne de régulation (ouverte), ne font perdre que quelques cmCE.

Il est constitué par la combinaison d'un robinet vanne motorisé équipé de contacts de fin de course et d'un capteur analogique de position, associé à un débitmètre à champ total et placé à l'aval de chacun des filtres, sur la conduite de sortie d'eau filtrée, et de deux capteurs de niveau à l'amont de chaque filtre, l'ensemble étant piloté par un automate de filtration programmé pour calculer et maintenir automatiquement dans chaque filtre un débit égal au quotient du débit global à traiter par le nombre de filtres en service, et générer des alarmes en cas d'anomalies relatives aux débits ou aux niveaux amont.

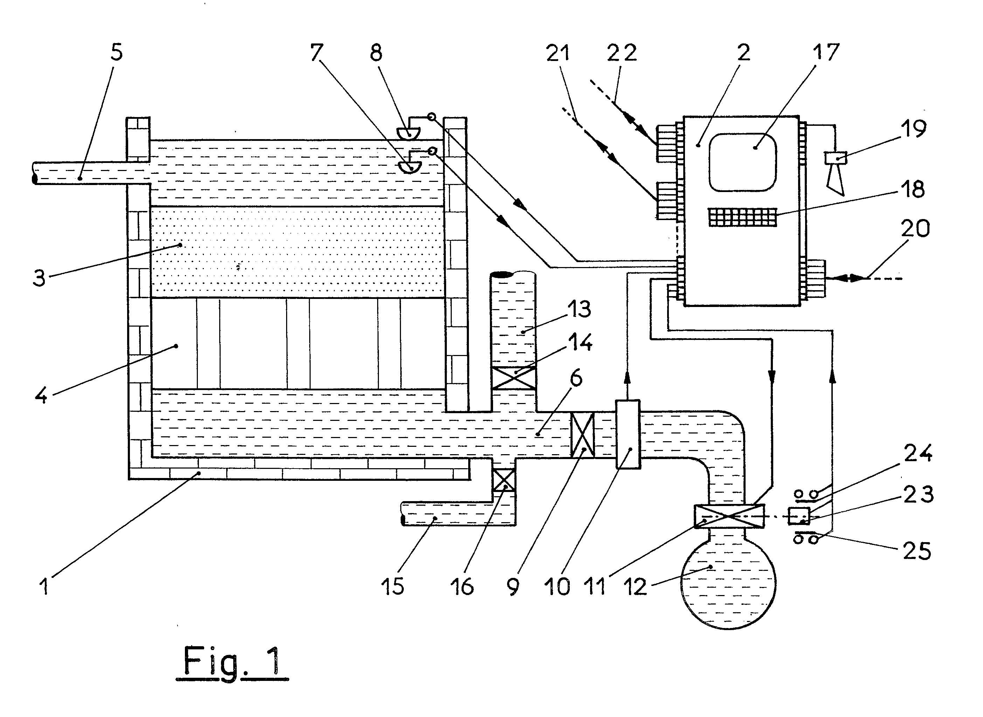

Sur le dessin annexé, donné à titre d'exemple non limitatif d'une des formes de l'invention :

On peut voir une coupe schématique de l'un des filtres, l'automate de filtration, ainsi que les liaisons électriques de celui-ci avec les filtres et le poste de surveillance ou un éventuel ordinateur central.

Le dispositif est constitué d'une part, de filtres composés d'un bassin 1 comportant des masses filtrantes 3 et 4 ainsi que des conduites d'arrivée d'eau brute 5 et de sortie d'eau filtrée 6 et d'autre part, d'un automate programmable de filtration 2.

Le bassin 1 est pourvu en partie haute de deux capteurs de niveau 7 et 8.

La conduite d'eau filtrée 6 aboutit dans le collecteur d'eau filtrée 12. Elle comporte à la sortie du bassin 1 deux piquages, à savoir, une conduite de rétro-lavage 13 munie d'un robinet vanne 14 et une conduite de vidange 15 munie du robinet vanne 16, elle est équipée ensuite successivement d'un robinet vanne de production 9 isolant le filtre du collecteur d'eau filtrée 12, d'un débitmètre électromagnétique à champ total 10 et d'un robinet vanne de régulation 11 à régulation pneumatique.

L'automate programmable de filtration 2 comporte un moyen d'affichage 17, un clavier 18, une alarme sonore 19 et une liaison électrique 20 avec le poste de l'opérateur ou un ordinateur central. Il reçoit des informations sur l'état des sondes de niveau 7 et 8, et des capteurs de fin de course et de position angulaire du robinet vanne de régulation 11, ainsi que la valeur donnée par le débitmètre 10, grâce à des liaisons appropriées 21, 22, identiques pour chaque filtre.

Le dispositif est piloté par l'automate de filtration 2 qui contrôle plusieurs paramètres dont notamment le débit du collecteur général 12 et le nombre de filtres en service en automatique. Le débit qui sera maintenu à l'aval de chacun des filtres en service sera fixé par le calculateur à une valeur consigne égale au rapport du débit global sur le nombre de filtres en service.

Lorsque le filtre se colmate, son débit a tendance à diminuer et une régulation "proportionnelle-intégrale-différentielle" (PID) est générée par l'automate 2 qui tend à annuler l'écart mesuré en ouvrant le robinet vanne de régulation 11 jusqu'à ce que la valeur de consigne du débit soit atteinte. L'inverse se produit lorsque le filtre est propre, après une séance de décolmatage, alors que le filtre a tendance à s'emballer.

Par ailleurs, des contacts fin de course 24 et 25 disposés en butée d'ouverture et de fermeture signalent à l'automate 2 les positions anormales. Un capteur de position analogique 23 transmet également au calculateur la position du robinet vanne de régulation 11, une alarme pouvant être donnée sur une position prédéterminée et proposer à l'opérateur le lavage du filtre. L'automate génère également des alarmes sur seuils paramétrables haut et bas sur chacun des débitmètres, ainsi que sur le niveau en amont de chaque filtre grâce aux deux capteurs de niveau 7 et 8.

De cette façon, toute position anormale du robinet vanne de régulation 11 ou toute anomalie de débit traité par le filtre est signalée à l'opérateur ou au calculateur central, qui peuvent réagir en conséquence.

Suivant une variante d'exécution, les robinets vannes de production 9 de lavage 14 et de vidange 16 peuvent être motorisés et être pilotés par l'automate 2 de manière à rendre les cycles de décolmatage par rétro-lavages automatiques, ceux-ci pouvant être déclenchés périodiquement ou en fonction de la position du robinet vanne de régulation 11.

Grâce à sa totale automaticité et à sa grande souplesse d'utilisation, le dispositif qui vient d'être décrit se prête particulièrement bien à la réalisation d'installations de filtration à filtres multiples avec gestion informatisée.

Le positionnement des divers éléments constitutifs donnent à ce dispositif un maximum d'effets utiles qui n'avaient pas été obtenus à ce jour par des dispositifs similaires.

Cependant, les formes, dimensions et dispositions des différents éléments, ainsi que les matières utilisées pour leur fabrication pourront varier dans la limite des équivalents, sans changer pour cela, la conception générale de l'invention qui vient d'être décrite.

## Revendications

1. Dispositif de régulation d'usine de filtration à filtres multiples ayant pour objet d'assurer à la fois le respect d'une consigne de débit global d'eau filtrée ou d'eau brute de l'usine, et l'équirépartition sur chacun des filtres en service de ce débit, quelles que soient les variations de ce dernier, tout en réduisant les pertes de charge au minimum, caractérisé par la combinaison d'un robinet vanne motorisé (11) équipé de contacts de fin de course (24, 25) et d'un capteur analogique de position (23), associé à un débitmètre à champ total (11) et placé à l'aval de chacun des filtres (1, 3, 4), sur la conduite de sortie d'eau filtrée (6), et de deux capteurs de niveau (7, 8) situés à l'amont de chaque filtre, l'ensemble étant piloté par un automate programmable de filtration (2) comportant des moyens d'affichage (17) d'entrée de données (18), de liaison électrique avec les filtres (21, 22) et avec un poste de surveillance ou un ordinateur central (20), chaque filtre étant alimenté par une conduite d'eau brute (5) et comportant en aval, sur la conduite de sortie (6) une vanne de production (9) ainsi que deux piquages, l'un étant une conduite de rétro-lavage équipé d'un robinet vanne (14), l'autre étant une conduite de vidange (15) muni d'un robinet vanne (16).

2. Dispositif suivant la revendication 1, se caractérisant par le fait que l'automate programmable de filtration (2) reçoit des infor sur l'état des sondes de niveau (7) et (8), et des capteurs de fin de course (24, 25) et de position angulaire (23) du robinet vanne de régulation (11), ainsi que la valeur donnée par le débitmètre (10), grâce à des liaisons électriques (21, 22), identiques pour chaque filtre, et qu'il est programmé de manière à déterminer un débit unitaire de consigne égal au quotient du débit total à traiter par le nombre des filtres en service, à maintenir ce débit unitaire en agissant sur le robinet vanne motorisé (11), ou à générer des alarmes si ce débit ne peut être atteint ou en cas d'anomalie des indications fournies par les capteurs de niveau (7, 8) ou de position (23, 24, 25) du robinet vanne (11), ces alarmes pouvant générer un affichage (17) et un signal sonore (19) locaux ou être transmis à un poste de surveillance ou un ordinateur central par liaisons électriques (20).

3. Dispositif suivant les revendications 1 et 2 et selon une variante d'exécution, se caractérisant par le fait que les robinets vannes de production (9) isolant le filtre du collecteur d'eau filtrée (12), de lavage (14) et de vidange (16) sont motorisés et commandés par l'automate de filtrage (2), de manière à provoquer un rétro-lavage par envoi dans le filtre (1) d'eau sous pression à contre courant, lorsque l'ouverture du robinet vanne de régulation (11) ne peut plus compenser la diminution du débit du filtre due au colmatage.

Fig. 1

PL. 1/1

EP 0 352 205 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 5) |
|---|---|---|---|
| A | GB-A-1 540 074 (PLATON LTD)<br>* Page 1, lignes 26-74 *<br>--- | 1,2 | B 01 D 24/00<br>B 01 D 24/48<br>B 01 D 37/04 |
| A | GB-A- 693 101 (CHABAL & CIE)<br>* Page 1, lignes 18-69; page 4, ligne 129 - page 5, ligne 38 *<br>----- | 1,2 | |

**DOMAINES TECHNIQUES RECHERCHES (Int. Cl.5)**

C 02 F
B 01 D

Le présent rapport a été établi pour toutes les revendications

| Lieu de la recherche | Date d'achèvement de la recherche | Examinateur |
|---|---|---|
| LA HAYE | 18-10-1989 | GONZALEZ Y ARIAS M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                                          
& : membre de la même famille, document correspondant

EPO FORM 1503 03.82 (P0402)